# EUROPÄISCHE PATENTSCHRIFT

(11) **EP 3 921 176 B1**
(45) Veröffentlichungstag und Bekanntmachung des Hinweises auf die Patenterteilung: **20.11.2024**
(21) Anmeldenummer: 20705149.1
(22) Anmeldetag: 07.02.2020
(51) Int. Cl.: B41M 5/00, B41J 11/00, B41M 1/28, B41M 1/30, B41J 29/393, B05D 1/26, B05D 3/14, G01N 13/02

(54) **VERFAHREN UND VORRICHTUNG ZUR OBERFLÄCHENBEHANDLUNG EINES DRUCKMEDIUMS**
METHOD AND DEVICE FOR TREATING THE SURFACE OF A PRINTING MEDIUM
PROCÉDÉ ET DISPOSITIF POUR LE TRAITEMENT DE SURFACE D'UN SUPPORT D'IMPRESSION

(30) Priorität: 07.02.2019 DE 102019103094
(43) Veröffentlichungstag der Anmeldung: 15.12.2021
(73) Patentinhaber: Windmöller & Hölscher KG, 49525 Lengerich (DE); Kalwar CFT Fusionstechnik GmbH, 33790 Halle/Westfalen (DE)
(72) Erfinder: CORDROCH, Wolfgang, 49525 Lengerich (DE); LEPPING, Danjo, 49525 Lengerich (DE); MICHAEL, Sven, 49525 Lengerich (DE); VOELSCHOW, Jens, 49525 Lengerich (DE); KALWAR, Georg, 33790 Halle/Westfalen (DE); KALWAR, Markus, 33790 Halle/Westfalen (DE)
(74) Vertreter: Kretschmann, Dennis
(86) Internationale Anmeldenummer: PCT/EP2020/053060
(87) Internationale Veröffentlichungsnummer: WO 2020/161272

(56) Entgegenhaltungen:
- EP-A1- 2 743 090
- EP-A1- 3 124 256
- EP-A1- 3 248 805
- US-A1- 2015 251 453
- US-A1- 2015 258 814

## Beschreibung

### Gebiet der Erfindung

Die Erfindung bezieht sich auf ein Verfahren und auf eine Vorrichtung zur Oberflächenbehandlung eines Druckmediums, insbesondere für das Drucken wasserlöslicher Tinten auf Folien.

### Hintergrund der Erfindung

Für Kunststofffolien haben sich neben den druckformgebundenen Druckverfahren (insbesondere Flexodruck, Tiefdruck und Offsetdruck) zunehmend auch Digitaldruckverfahren etabliert, bei denen die Druckfarbe ohne Druckform auf die Folie aufgebracht wird. Beispielsweise kann die Druckfarbe im Tintenstrahl-Verfahren (Inkjet-Verfahren) auf die Folie aufgebracht werden. Dabei können auch wasserlösliche Druckfarben eingesetzt werden, wie es insbesondere beim Bedrucken von Lebensmittelverpackungen vorteilhaft ist.

Kunststofffolien, zum Beispiel aus Polypropylen (PP) oder Polyethylen (PE), haben grundsätzlich eine unpolare Eigenschaft, was das Bedrucken mit wasserlöslicher und daher polarer Farbe erschwert. Für eine saubere unlösbare Verbindung zwischen einer Flüssigkeit und einer Substratoberfläche sollte die Oberflächenenergie des Substrats (auch als Oberflächenspannung bezeichnet) die Oberflächenspannung der Flüssigkeit geringfügig, beispielsweise um etwa 2 bis 10 mN/m, übersteigen. Die Oberflächenenergie von Kunststoffen ist jedoch im Allgemeinen deutlich niedriger als die Oberflächenspannung wasserlöslicher Flüssigkeiten. Es ist daher in vielen Fällen notwendig oder zumindest zweckmäßig, derartige Kunststofffolien vor dem Bedrucken zu behandeln, um ihre Oberflächenenergie zu erhöhen und eine ausreichende Haftung der polaren wasserlöslichen Farbe auf der Kunststofffolie zu gewährleisten.

Beispielsweise kann vor dem eigentlichen Bedrucken auf die Kunststofffolie eine Vermittlungsschicht (sogenannter "Primer") erhöhter Polarität aufgetragen werden. Damit ist jedoch ein zusätzlicher Verfahrensschritt verbunden, welcher mit entsprechendem Zeit- und Kostenbedarf einhergeht. Zudem muss die Vermittlungsschicht vor dem Bedrucken getrocknet werden, wodurch sich der Zeitbedarf zusätzlich erhöht.

Alternativ kann die Kunststofffolie vor dem Bedrucken physikalisch und/oder chemisch behandelt werden, um die Polarität der Oberfläche der Kunststofffolie zu erhöhen und eine ausreichende Haftung wasserlöslicher Farben auf der Kunststofffolie zu gewährleisten. Eine physikalische und/oder chemische Oberflächenbehandlung kann beispielsweise eine PlasmaBehandlung umfassen, wie sie exemplarisch in der WO 2016/188964 A1 beschrieben ist. Alternativ ist auch eine Corona-Behandlung möglich. Mit beiden Verfahren lässt sich eine Oberflächenspannung bzw. Oberflächenenergie der Kunststofffolie einstellen und damit eine Haftung auch wasserlöslicher Druckfarben sicherstellen.

Allerdings hängt der Grad der Polarität bzw. Oberflächenenergie, welcher für ein gutes Druckergebnis erforderlich ist, sowohl von den Eigenschaften der Druckflüssigkeit und sonstigen Druckparameter als auch von den Eigenschaften der Folie, beispielsweise deren Material und Dicke, ab.

Die EP 3 248 805 A1 beschreibt ein Verfahren zur Corona-Behandlung oder PlasmaBehandlung von Druckmedien, um die Oberflächenenergie des Druckmediums anzupassen. Eine Flüssigkeit wird auf das Druckmedium gedruckt, das Druckergebnis wird analysiert, und in Abhängigkeit von dem analysierten Druckergebnis wird die Oberflächenbehandlung des Druckmediums angepasst.

Weitere ähnliche Verfahren zur Oberflächenbehandlung sind aus den Druckschriften EP 2 743 090 A1, US 2015/0251453 A1 und US 2015/0258814 A1 bekannt.

Die EP 3 124 256 A1 beschreibt Verfahren zur Oberflächenbehandlung von Druckmedien, bei denen das Ergebnis der Oberflächenbehandlung vor dem Bedrucken mit einer Reflektivitätsmessung der oberflächenbehandelten Oberfläche unter Verwendung einer Hyperspektralkamera erfasst wird.

Es besteht daher Bedarf für ein verbessertes Verfahren zur Oberflächenbehandlung, welches eine zielgenaue, an die Druckparameter und/oder das Druckmedium angepasste physikalische und/oder chemische Behandlung einer Oberfläche des Druckmediums gestattet.

### Überblick über die Erfindung

Diese Aufgabe wird gelöst durch ein Verfahren zur Oberflächenbehandlung eines Druckmediums gemäß Anspruch 1 sowie durch eine Vorrichtung zur Oberflächenbehandlung eines Druckmediums gemäß Anspruch 8. Die abhängigen Ansprüche beziehen sich auf vorteilhafte Weiterbildungen.

Ein erfindungsgemäßes Verfahren zur Oberflächenbehandlung eines Druckmediums umfasst ein physikalisches und/oder chemisches Behandeln einer Oberfläche des Druckmediums, umfassend ein Einstellen einer Oberflächenspannung oder Oberflächenenergie des Druckmediums; ein Aufbringen mehrerer Proben einer Testflüssigkeit auf die physikalisch und/oder chemisch behandelte Oberfläche des Druckmediums, wobei die mehreren Proben verteilt über eine Breite des Druckmediums in einer Richtung quer zu einer Transportrichtung des Druckmediums aufgebracht werden; ein Detektieren eines Verhaltens der Testflüssigkeit auf der physikalisch und/oder chemisch behandelten Oberfläche, wobei das Verhalten der Testflüssigkeit ein Kontaktverhalten und/oder ein Fließverhalten der Testflüssigkeit auf der Oberfläche umfasst und wobei aus dem detektierten Verhalten der Testflüssigkeit räumliche Variationen von Oberflächeneigenschaften des Druckmediums erfasst werden; und ein Anpassen des physikalischen und/oder chemischen Behandelns der Oberfläche des Druckmediums in Abhängigkeit von dem detektierten Verhalten, umfassend ein Anpassen der Oberflächenspannung oder Oberflächenenergie des Druckmediums.

Das Aufbringen einer Testflüssigkeit auf die physikalisch und/oder chemisch behandelte Oberfläche des Druckmediums und das Detektieren eines Verhaltens der Testflüssigkeit auf der Oberfläche kann erfindungsgemäß eine Anpassung des physikalischen und/oder chemischen Behandelns der Oberfläche und damit letztendlich ein Einstellen der physikalischen und/oder chemischen Behandlung auf Parameter, welche an das Druckverfahren, die verwendete Druckflüssigkeit, das Druckmedium bzw. dessen Oberflächenbeschaffenheit angepasst sind, ermöglichen. Auf diese Weise kann die physikalische und/oder chemische Behandlung an unterschiedliche Oberflächen bzw. unterschiedliche Druckmedien sowie unterschiedliche Druckflüssigkeiten bzw. unterschiedliche Druckgeschwindigkeiten angepasst werden.

In einer Ausführungsform umfasst das Detektieren ein Bestimmen eines Kontaktwinkels und/oder eines Tropfendurchmessers und/oder eines Spreitverhaltens der Testflüssigkeit auf der Oberfläche. Daraus lassen sich in einigen Beispielen Rückschlüsse ziehen auf die Polarität bzw. die Oberflächenspannung bzw. die Oberflächenenergie des Druckmediums, und das physikalische und/oder chemische Behandeln der Oberfläche des Druckmediums kann entsprechend angepasst werden.

Das Detektieren des Verhaltens der Testflüssigkeit kann insbesondere ein optisches Detektieren umfassen.

Durch optisches Detektieren, beispielsweise mithilfe einer Kamera oder eines optischen Sensors, lassen sich ein Kontaktwinkel und/oder ein Tropfendurchmesser und/oder ein Spreitverhalten der Testflüssigkeit auf der Oberfläche zuverlässig bestimmen.

In einer Ausführungsform umfasst das physikalische und/oder chemische Behandeln der Oberfläche ein Anpassen der Oberflächenspannung bzw. Oberflächenenergie des Druckmediums an eine vorbestimmte Druckflüssigkeit.

Das Anpassen des physikalischen und/oder chemischen Behandelns der Oberfläche kann insbesondere ein Anpassen der Oberflächenspannung bzw. Oberflächenenergie des Druckmediums an eine vorbestimmte Druckflüssigkeit.

Das physikalische und/oder chemische Behandeln der Oberfläche bzw. das Anpassen kann ein Einstellen einer Oberflächenspannung bzw. einer Oberflächenenergie des Druckmediums im Bereich von bis zu +/- 5 mN/m umfassen, insbesondere von bis zu +/- 3 mN/m.

Durch Anpassung der Oberflächenspannung bzw. Oberflächenenergie über die vorgenannten Bereiche lassen sich für viele unterschiedliche Druckmedien, insbesondere unterschiedliche Kunststofffolien, hervorragende Druckergebnisse erzielen.

Als physikalisches und/oder chemisches Behandeln im Sinne der Offenbarung kann jede Art von Oberflächenbehandlung verstanden werden. Insbesondere zählt dazu eine reaktive Oberflächenbehandlung, die dazu eingerichtet ist, eine Polarität bzw. Oberflächenspannung bzw. Oberflächenenergie der Oberfläche zu modifizieren.

In einer Ausführungsform umfasst das physikalische und/oder chemische Behandeln ein elektrochemisches Behandeln.

Grundsätzlich können im Rahmen der erfindungsgemäßen Lehre sämtliche Techniken zum physikalischen und/oder chemischen Behandeln einer Oberfläche des Druckmediums zum Einsatz kommen, abhängig von den Eigenschaften des Druckmediums und der Druckflüssigkeit.

Ein physikalisches und/oder chemisches Behandeln kann insbesondere das Behandeln der Oberfläche des Druckmediums mit einem Teilchenstrom umfassen, beispielsweise einem Strom geladener Teilchen und/oder freier Radikale.

Das physikalische und/oder chemische Behandeln der Oberfläche kann insbesondere ein Corona-Behandeln und/oder ein Plasma-Behandeln und/oder ein Beflammen der Oberfläche und/oder ein Behandeln der Oberfläche mit Radikalen umfassen.

Durch ein physikalisches und/oder chemisches Behandeln der Oberfläche in Verbindung mit der erfindungsgemäßen Anpassung kann in einigen Ausführungsform auf ein Beschichten des Druckmediums bzw. Beschichten einer Oberfläche des Druckmediums zum Zwecke der Anpassung der Oberflächeneigenschaften verzichtet werden.

In einigen Ausführungsformen umfasst die Oberfläche des Druckmediums daher keine Beschichtung, insbesondere keinen Primer.

Die Verfahrenseffizienz wird durch einen Verzicht auf einen separaten Beschichtungsschritt gesteigert, und die Verfahrenskosten werden gesenkt.

In einer Ausführungsform kann das Anpassen des physikalischen und/oder chemischen Behandelns in einer Rückkopplungsschleife selbsttätig in Abhängigkeit von dem detektieren Verhalten erfolgen.

Insbesondere kann dazu zumindest ein beim Detektieren des Verhaltens der Testflüssigkeit aufgenommener Parameter mit einem voreingestellten Zielparameter verglichen werden. Basierend auf dem Vergleich kann das physikalische und/oder chemische Behandeln der Oberfläche des Druckmediums derart angepasst werden, dass der aufgenommene Parameter sich in Richtung auf den voreingestellter Zielparameter hin verändert bzw. den voreingestellter Zielparameter oder einen voreingestellten Zielkorridor erreicht.

Eine Rückkopplungsschleife erlaubt eine selbsttätige Anpassung der physikalischen und/oder chemischen Behandlung an unterschiedliche Folien und Druckgeschwindigkeiten.

Eine Testflüssigkeit im Sinne der Offenbarung kann jede Flüssigkeit sein, welche dazu geeignet ist, bei Detektion ihres Verhaltens auf der physikalisch und/oder chemisch behandelten Oberfläche Rückschlüsse auf die Oberflächeneigenschaften, insbesondere auf die Oberflächenspannung bzw. Oberflächenenergie, zuzulassen.

Insbesondere kann die Testflüssigkeit eine Druckflüssigkeit umfassen oder sein. Die Testflüssigkeit kann in einer Ausführungsform die für das Bedrucken der Oberfläche des Druckmediums vorgesehene Druckflüssigkeit bzw. Tinte sein.

Die Druckflüssigkeit kann eine wasserlösliche Tinte umfassen oder sein.

In einer Ausführungsform umfasst das Verfahren ferner das Aufbringen einer Druckflüssigkeit auf die physikalisch und/oder chemisch behandelte Oberfläche des Druckmediums nach dem Anpassen.

In einer Ausführungsform wird die Druckflüssigkeit im Tintenstrahldruckverfahren aufgebracht.

Die Druckflüssigkeit kann eine wasserlösliche Tinte umfassen oder sein.

Das Aufbringen der Probe der Testflüssigkeit kann im Druckverfahren erfolgen. Insbesondere kann die Probe der Testflüssigkeit im Tintenstrahlverfahren auf die physikalisch und/oder chemisch behandelte Oberfläche des Druckmediums aufgebracht werden.

Das Druckmedium kann Kunststoff und/oder Papier und/oder Pappe und/oder Metall sowie jeden weiteren zum Bedrucken geeigneten Stoff umfassen.

In einer Ausführungsform umfasst das Druckmedium eine Folie, insbesondere eine Kunststofffolie, zum Beispiel eine im Blasverfahren extrudierte Kunststofffolie.

Die Folie kann beispielsweise Polyethylenterephthalat (PET) und/oder Polyethylen (PE) und/oder Polyethylen geringer Dichte ("Low Density Polyethylen", LDPE) und/oder biaxial orientiertes Polypropylen ("Biaxially Oriented Polypropylen", BOPP) umfassen.

In einigen Ausführungsformen kann das Aufbringen der Probe der Testflüssigkeit und das Detektieren des Verhaltens der Testflüssigkeit in einer Kalibrierungsumgebung erfolgen, welche von der Druckumgebung räumlich und funktional getrennt ist.

In anderen Ausführungsformen kann das Aufbringen der Probe der Testflüssigkeit und/oder das Detektieren des Verhaltens der Testflüssigkeit dem Bedrucken des Druckmediums (inline) vorgeschaltet sein.

In einer Ausführungsform wird das Druckmedium während des physikalischen und/oder chemischen Behandelns und/oder des Aufbringens der zumindest einen Probe und/oder des Detektierens und/oder des Anpassens und/oder des Aufbringens der Druckflüssigkeit bewegt, insbesondere kontinuierlich bewegt.

Bei einer Ausführungsform können mehrere Proben der Testflüssigkeit oder unterschiedlicher Testflüssigkeiten verteilt über eine Breite des Druckmediums aufgebracht und detektiert werden.

Auf diese Weise lässt sich die Messgenauigkeit bzw. die Einstellgenauigkeit zusätzlich verbessern. Zudem lassen sich über das Verhalten der Testflüssigkeit(en) räumliche Variationen der Eigenschaften des Druckmediums erfassen und quantifizieren.

Die Erfindung bezieht sich auch auf ein rechnerlesbares Programm oder ein rechnerlesbares Programm-Produkt, welches rechnerlesbare Instruktionen umfasst, wobei die rechnerlesbaren Instruktionen dazu eingerichtet sind, ein Verfahren mit einem oder allen der vorgenannten Merkmale auszuführen.

Die Erfindung bezieht sich ferner auf eine Vorrichtung zur Oberflächenbehandlung eines Druckmediums mit einer Behandlungseinheit, welche zum physikalischen und/oder chemischen Behandeln einer Oberfläche des Druckmediums eingerichtet ist, wobei das physikalische und/oder chemische Behandeln der Oberfläche ein Einstellen einer Oberflächenspannung oder Oberflächenenergie des Druckmediums umfasst, einer Applikationseinheit, welche zum Aufbringen mehrerer Proben einer Testflüssigkeit verteilt über eine Breite des Druckmediums in einer Richtung quer zu einer Transportrichtung des Druckmediums auf die physikalisch und/oder chemisch behandelte Oberfläche des Druckmediums eingerichtet ist, einer Detektionseinheit, welche zum Detektieren eines Verhaltens der Testflüssigkeit auf der physikalisch und/oder chemisch behandelten Oberfläche eingerichtet ist, wobei das Verhalten der Testflüssigkeit ein Kontaktverhalten und/oder ein Fließverhalten der Testflüssigkeit auf der Oberfläche umfasst, wobei die Detektionseinheit dazu eingerichtet ist, das Verhalten der Testflüssigkeit über die Breite des Druckmediums zu detektieren, und wobei die Vorrichtung (10; 30) ferner dazu eingerichtet ist, aus dem detektierten Verhalten räumliche Variationen von Oberflächeneigenschaften des Druckmediums zu erfassen; und einer Steuereinheit, welche zum Anpassen des physikalischen und/oder chemischen Behandelns der Oberfläche des Druckmediums in Abhängigkeit von dem detektieren Verhalten eingerichtet ist, umfassend ein Anpassen der Oberflächenspannung oder Oberflächenenergie des Druckmediums.

Die Vorrichtung kann insbesondere zur Ausführung eines Verfahrens mit einem oder allen der vorangehend beschriebenen Merkmale eingerichtet sein.

In einer Ausführungsform sind die Behandlungseinheit und/oder die Applikationseinheit und/oder die Detektionseinheit in Reihe entlang einer Transportrichtung des Druckmediums eingerichtet bzw. positioniert.

In einer Ausführungsform umfasst die Vorrichtung zusätzlich eine Druckeinheit zum Aufbringen einer Druckflüssigkeit auf die physikalisch und/oder chemisch behandelte Oberfläche des Druckmediums nach dem Anpassen.

Die Druckeinheit kann insbesondere in Reihe mit der Behandlungseinheit und/oder der Applikationseinheit und/oder der Detektionseinheit entlang einer Transportrichtung des Druckmediums eingerichtet bzw. positioniert sein.

In einer Ausführungsform umfasst die Vorrichtung zusätzlich eine Transporteinheit zum Transportieren des Druckmediums in einer Transportrichtung entlang der Behandlungseinheit und/oder der Applikationseinheit und/oder der Detektionseinheit und/oder der Druckeinheit.

Die Detektionseinheit kann einen optischen Sensor umfassen, insbesondere einen optischen Sensor zum Bestimmen eines Kontaktwinkels und/oder eines Tropfendurchmessers und/oder eines Spreitverhaltens der Testflüssigkeit auf der Oberfläche.

### Kurze Beschreibung der Zeichnungen

Die Eigenschaften und zahlreichen Vorteile der erfindungsgemäßen Lösung lassen sich am besten verstehen aus einer Beschreibung von beispielhaften Ausführungsformen unter Bezugnahme auf die Zeichnungen, in denen:
- Fig. 1: eine schematische Darstellung einer Vorrichtung zur Oberflächenbehandlung eines Druckmediums gemäß einer Ausführungsform zeigt;
- Fig. 2: eine schematische Darstellung einer Vorrichtung zur Oberflächenbehandlung eines Druckmediums gemäß einer weiteren Ausführungsform zeigt;
- Fig. 3: schematisch das Detektieren eines Kontaktwinkels und eines Tropfendurchmessers einer Testflüssigkeit mit einer Detektionseinheit gemäß einer Ausführungsform zeigt;
- Fig. 4a u. 4b: schematisch das Detektieren eines Spreitverhaltens einer Testflüssigkeit mit einer Detektionseinheit gemäß einer Ausführungsform zeigen; und
- Fig. 5: ein Flussdiagramm eines Verfahrens zur Oberflächenbehandlung eines Druckmediums gemäß einer Ausführungsform zeigt.

### Beschreibung von Ausführungsformen

Ausführungsformen werden nachfolgend beschrieben für das Beispiel einer Oberflächenbehandlung bzw. des Bedruckens einer Kunststofffolie, insbesondere einer Kunststofffolie für Lebensmittelverpackungen. Das erfindungsgemäße Verfahren und die erfindungsgemäße Vorrichtung können allerdings für eine Vielzahl unterschiedlicher Druckmedien eingesetzt werden.

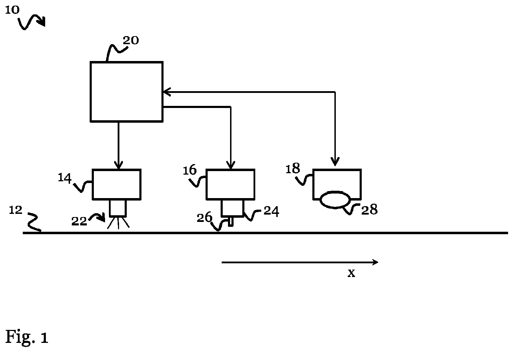

Figur 1 zeigt eine Vorrichtung 10 zur Oberflächenbehandlung eines Druckmediums 12, beispielsweise einer Kunststofffolie, in einer schematischen Seitenansicht. In der gezeigten Ausführungsform wird die Kunststofffolie von links nach rechts entlang der Pfeilrichtung x bewegt. Die Kunststofffolie kann beispielsweise in einer Blasextrusionsvorrichtung (nicht gezeigt) hergestellt worden sein, welche der Vorrichtung 10 vorgeschaltet ist.

Die Vorrichtung 10 umfasst eine Behandlungseinheit 14, eine Applikationseinheit 16 und eine Detektionseinheit 18, die in dieser Reihenfolge entlang der Bewegungsrichtung x über der Kunststofffolie 12 angeordnet und einer Oberseite der Kunststofffolie 12 zugewandt und unmittelbar benachbart sind. Zudem umfasst die Vorrichtung 10 eine Steuereinheit 20, welche mit der Behandlungseinheit 14, der Applikationseinheit 16 und der Detektionseinheit 18 kommunikativ gekoppelt ist, beispielsweise über eine Leitungsverbindung oder drahtlos.

Die Behandlungseinheit 14 ist dazu eingerichtet, die Oberfläche der Kunststofffolie 12 physikalisch und/oder chemisch zu behandeln, um auf diese Weise die Oberflächeneigenschaften der Kunststofffolie 12 zu modifizieren und insbesondere die Polarität der Oberfläche oder die Oberflächenspannung bzw. Oberflächenenergie auf ein vorbestimmtes Zielintervall oder einen vorbestimmten Zielwert relativ zur einer Druckflüssigkeit einzustellen. Die Behandlungseinheit 14 kann beispielsweise eine Corona-Einheit sein, welche zur Erzeugung einer Corona-Entladung eingerichtet ist und einen bei der Corona-Entladung entstehenden Strom geladener Teilchen 22 auf die Oberfläche der Kunststofffolie 12 leitet. Die geladenen Teilchen, insbesondere Elektronen und/oder Ionen, können dann mit den Atomen bzw. Molekülen der Kunststofffolie 12 an deren Oberseite chemisch reagieren, wodurch sich die Oberflächeneigenschaften der Kunststofffolie 12 verändern und insbesondere ihre Polarität erhöht werden kann. Auf diese Weise kann die Oberflächenenergie der Kunststofffolie 12 derart an die Oberflächenspannung einer vorbestimmten Druckflüssigkeit angepasst werden, dass die Oberflächenenergie der Kunststofffolie 12 die Oberflächenspannung der Druckflüssigkeit geringfügig, beispielsweise um etwa 2 bis 10 mN/m, übersteigt. Die Kunststofffolie 12 lässt sich dann im Allgemeinen gut mit der Druckflüssigkeit bedrucken.

In anderen Ausführungsformen umfasst die Behandlungseinheit 14 eine Plasma-Einheit, wie sie in weiteren Einzelheiten beispielsweise in der WO 2016/188964 A1 beschrieben ist. Die Wirkung auf die Kunststofffolie 12 ist ähnlich wie bei der vorangehend beschriebenen Corona-Einheit.

Zusätzlich oder alternativ kann die Behandlungseinheit 14 auch einen Strom freier Radikale erzeugen und auf die Oberfläche der Kunststofffolie 12 leiten. Ähnlich wie die geladenen Teilchen einer Corona-Entladung oder Plasma-Entladung können auch freie Radikale eine Modifikation der Oberflächeneigenschaften der Kunststofffolie 12 herbeiführen, insbesondere deren Polarität und/oder Oberflächenspannung bzw. Oberflächenenergie verändern.

Die Ansteuerung der Behandlungseinheit 14 erfolgt mittels der Steuereinheit 20.

Die Applikationseinheit 16 ist dazu eingerichtet, zumindest eine Probe einer Testflüssigkeit auf die physikalisch und/oder chemisch behandelte Oberfläche der Kunststofffolie 12 aufzubringen. Die Testflüssigkeit kann beispielsweise mit einer für ein nachfolgendes Bedrucken der Kunststoffstofffolie 12 vorgesehenen Druckflüssigkeit identisch sein. In anderen Ausführungsformen wird eine Testflüssigkeit eingesetzt, die sich von der Druckflüssigkeit unterscheidet. Im Allgemeinen kann jede Testflüssigkeit eingesetzt werden, deren detektierbares Verhalten auf der Oberfläche der Kunststofffolie 12 Rückschlüsse auf die Oberflächeneigenschaften der Kunststofffolie 12 zulässt.

Die Applikationseinheit 16 kann beispielsweise einen Druckkopf 24 mit einer Druckdüse 26, wie sie in ähnlicher Weise von einer Inkjet-Druckvorrichtung für Folien bekannt sind, umfassen. Der Druckkopf 24 kann in Reaktion auf ein Steuersignal der Steuereinheit 20 einen oder mehrere Tropfen der Testflüssigkeit mittels der Druckdüse 26 auf die Oberfläche der Kunststofffolie 12 applizieren.

In einigen Ausführungsformen ist die Applikationseinheit 16 dazu eingerichtet, über eine Breite der Kunststofffolie 12 (quer zur Bewegungsrichtung x) mehrere Tropfen der Testflüssigkeit zu applizieren. Dazu kann die Applikationseinheit 16 beispielsweise mehrere Druckdüsen 26 entlang einer Richtung quer zur Bewegungsrichtung x aufweisen oder in einer Richtung quer zur Bewegungsrichtung x verfahrbar sein.

Die Detektionseinheit 18 ist dazu eingerichtet, ein Verhalten der applizierten Testflüssigkeit auf der physikalisch und/oder chemisch behandelten Oberfläche der Kunststofffolie 12 zu detektieren. Beispielsweise kann die Detektionseinheit 18 einen optischen Sensor 28 umfassen, mit dem sich ein Kontaktwinkel und/oder ein Tropfendurchmesser und/oder ein Spreitverhalten der Testflüssigkeit auf der Oberfläche der Kunststofffolie 12 erfassen lässt.

Alternativ oder zusätzlich zu dem optischen Sensor 28 lassen sich auch andere Arten von Sensoren verwenden, mit denen sich ein Verhalten der Testflüssigkeit auf der physikalisch und/oder chemisch behandelten Oberfläche detektieren lässt. Insbesondere können kapazitive und/oder induktive Sensoren verwendet werden.

Die Detektionseinheit 18 stellt in dem gezeigten Ausführungsbeispiel die erfassten Messwerte an die Steuereinheit 20 bereit, welche in Reaktion auf die erfassten Messwerte die Behandlungseinheit 14 ansteuert, um das physikalische und/oder chemische Behandeln der Oberfläche der Kunststofffolie 12 anzupassen. Durch iterativ wiederholtes physikalisches und/oder chemisches Behandeln der Oberfläche der Kunststofffolie 12, Aufbringen der Testflüssigkeit und Detektieren der Testflüssigkeit sowie Anpassen des physikalischen und/oder chemischen Behandelns in Abhängigkeit von dem detektierten Verhalten lässt sich in einer Rückkopplungsschleife das physikalische und/oder chemische Behandeln derart einstellen, dass die detektierten Oberflächeneigenschaften der Kunststofffolie 12 bei oder nahe von vorbestimmten Zielwerten oder in vorbestimmten Zielintervallen liegen. Auf diese Weise lassen sich die Oberflächeneigenschaften der Kunststofffolie 12, insbesondere deren Polarität oder Oberflächenspannung bzw. Oberflächenenergie, selbsttätig auf für das nachfolgende Bedrucken geeignete Werte einstellen. Insbesondere kann sich die gezeigte Vorrichtung 10 selbsttätig an Kunststofffolien 12 aus unterschiedlichem Material oder mit unterschiedlicher Kunststofffoliendicke anpassen

In gleicher Weise lässt sich das physikalische und/oder chemische Behandeln der Oberfläche selbsttätig an veränderte Druckparameter, beispielsweise an eine Änderung der Druckgeschwindigkeit bzw. Transportgeschwindigkeit der Kunststofffolie 12 entlang der Transportrichtung x, oder an eine veränderte Tintenzusammensetzung anpassen.

In einigen Ausführungsformen kann die gezeigte Vorrichtung 10 in einer Kalibrierungsumgebung eingesetzt werden, welche von der eigentlichen Druckumgebung funktional und/oder räumlich getrennt ist ("nearline" oder "offline").

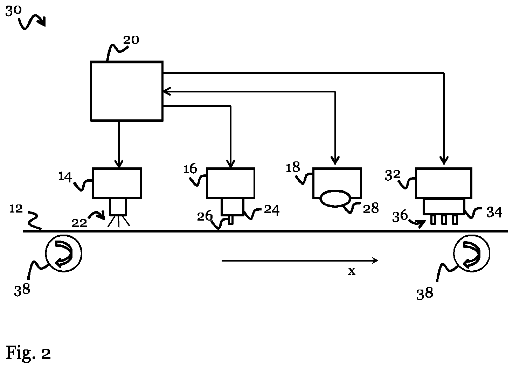

In anderen Ausführungsformen ist die erfindungsgemäße Vorrichtung zur Oberflächenbehandlung in die Druckumgebung integriert ("inline"). Eine entsprechende Druckvorrichtung 30 ist beispielhaft in der Figur 2 gezeigt. Die dargestellte Vorrichtung entspricht im wesentlichen der vorangehend unter Bezug auf Figur 1 beschriebenen Vorrichtung 10, und entsprechende Elemente sind durch dieselben Bezugszeichen gekennzeichnet. Jedoch umfasst die Druckvorrichtung 30 zusätzlich eine Druckeinheit 32, welche der Detektionseinheit 18 in Reihe entlang der Transportrichtung x nachgeordnet ist.

Die Druckeinheit 32 umfasst einen oder mehrere Druckköpfe 34 mit jeweils einer Druckdüse 36 oder mehreren Druckdüsen 36, welche zum Applizieren einer Druckflüssigkeit, beispielsweise einer wasserlöslichen Tinte, auf die physikalisch und/oder chemisch behandelte Oberfläche der Kunststofffolie 12 nach dem erfolgten Anpassen eingerichtet ist.

In einigen Ausführungsformen kann die Druckeinheit 32 über die Steuereinheit 20 angesteuert werden, wie in Figur 2 schematisch gezeigt ist. In anderen Ausführungsformen umfasst die Druckeinheit 32 ihre eigene separate Steuereinheit (nicht gezeigt).

Die Druckvorrichtung 30 der Figur 2 umfasst auch eine Transporteinheit 38 zum Transportieren der Kunststofffolie 12 entlang der Transportrichtung x von der Behandlungseinheit 14 über die Applikationseinheit 16 und die Detektionseinheit 18 bis zur Druckeinheit 32.

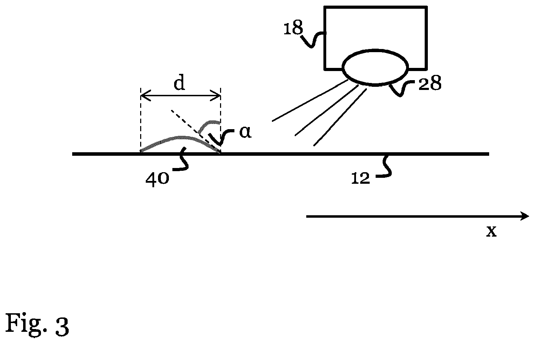

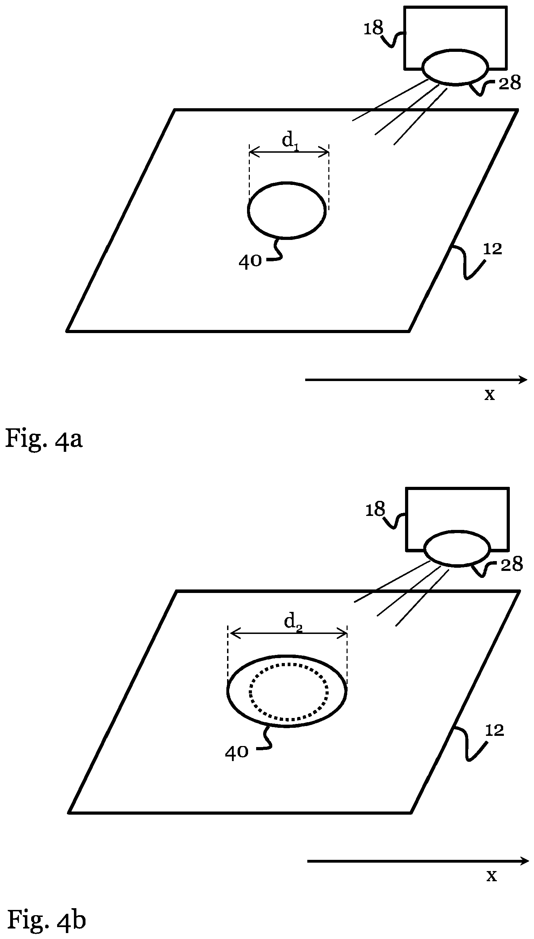

Die Figuren 3, 4 a und 4b zeigen schematisch und exemplarisch Techniken zum Detektieren des Verhaltens der Testflüssigkeit auf der Oberfläche der Kunststofffolie 12, wie sie im Rahmen der Erfindung eingesetzt werden können.

Figur 3 zeigt schematisch in einer Seitenansicht einen mittels der Druckdüse 26 der Applikationseinheit 16 auf die Oberfläche der Kunststofffolie 12 applizierten Tropfen 40 der Testflüssigkeit, beispielsweise einer wasserlöslichen Tinte. Mithilfe des optischen Sensors 28 der Detektionseinheit 18 lässt sich ein Durchmesser d und/oder ein Kontaktwinkel α des Flüssigkeitstropfens 40 bestimmen, welche Rückschlüsse auf die Polarität bzw. Oberflächenspannung bzw. Oberflächenenergie der Kunststofffolie 12 ermöglichen. Je größer der Kontaktwinkel a, desto größer ist die Polarität und die Benetzbarkeit der Oberfläche der Kunststofffolie 12 und desto geeigneter ist die Kunststofffolie im Allgemeinen für das Bedrucken mit einer wasserlöslichen Tinte.

Die Figuren 4a und 4b zeigen schematisch ein Erfassen eines Spreitverhaltens der Testflüssigkeit auf der physikalisch und/oder chemisch behandelten Oberfläche der Kunststofffolie 12 mittels des optischen Sensors 28 der Detektionseinheit 18. Das Spreitverhalten charakterisiert die dynamische räumliche Ausdehnung des Flüssigkeitstropfens 40 auf der Oberfläche der Kunststofffolie 12.

Figur 4a veranschaulicht die Ausdehnung des Flüssigkeitstropfens 40 zu einem ersten Zeitpunkt nach dem Applizieren, zu dem der Flüssigkeitstropfen 40 eine Ausdehnung d₁ aufweist. Figur 4b veranschaulicht schematisch die Vergrößerung der Ausdehnung des Flüssigkeitstropfens 40 gegenüber der (in Figur 4b zum Vergleich gestrichelt gezeigten) Ausdehnung der Figur 4a zu einem zweiten, späteren Zeitpunkt. Der Durchmesser des Flüssigkeitstropfens 40 hat sich auf einen Wert d₂ größer d₁ vergrößert. Aus der Größenzunahme pro Zeiteinheit und/oder aus einer Änderung einer Form des Tropfens 40 lassen sich ebenfalls Rückschlüsse auf die Oberflächenspannung bzw. Oberflächenenergie bzw. die Polarität der Oberfläche der Kunststofffolie 12 ziehen.

Die Steuereinheit 20 kann auf der Grundlage der von der Detektionseinheit 18 bereitgestellten Werte in der Rückkopplungsschleife die Behandlungseinheit 14 dann gezielt ansteuern, beispielsweise einen elektrischen Strom zur Erzeugung einer Corona-Entladung oder Plasma-Entladung der Behandlungseinheit 14 erhöhen oder herabsetzen, um auf diese Weise die Polarität oder Oberflächenspannung bzw. Oberflächenenergie der Kunststofffolie 12 derart einzustellen, dass das detektierte Verhalten der Testflüssigkeit in einem vorbestimmten Zielkorridor liegt. Die Steuereinheit 20 kann dazu beispielsweise eine speicherprogrammierbare Steuerung mit entsprechender Steuerungssoftware umfassen. Ein Zusammenhang zwischen den von der Detektionseinheit 18 detektierten Messwerten und den Betriebsparametern der Behandlungseinheit 14 und damit Steuerungsparameter für die Ansteuerung lassen sich beispielsweise empirisch bzw. durch Kalibrieren bestimmen.

Eine Applizieren der Testflüssigkeit und eine Messwertaufnahme an unterschiedlichen Stellen quer zur Transportrichtung x kann die Genauigkeit des Verfahrens erhöhen und erlaubt es zudem, vermittels des Verhaltens der Testflüssigkeit auf der physikalisch und/oder chemisch behandelten Oberfläche Fertigungstoleranzen des Druckmediums zu erfassen.

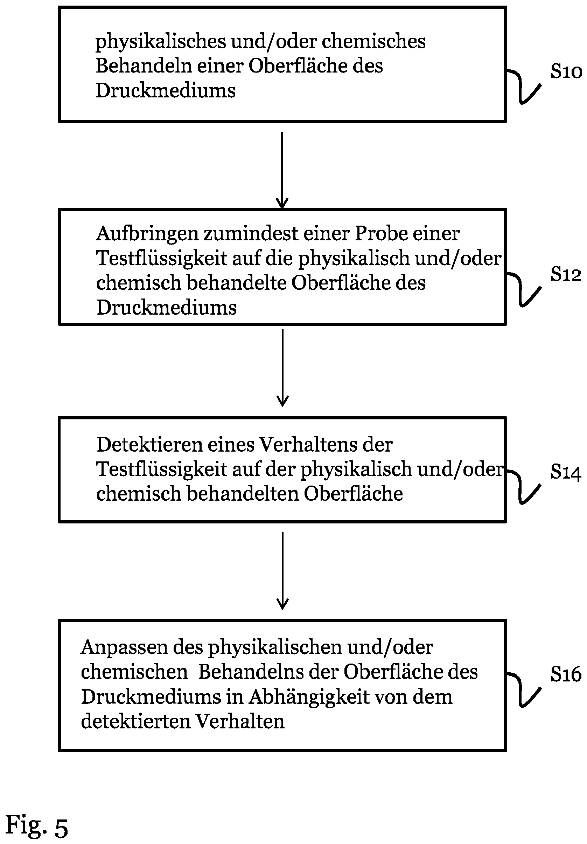

Figur 5 zeigt ein Flussdiagramm zur Veranschaulichung eines Verfahrens zur Oberflächenbehandlung eines Druckmediums gemäß einer Ausführungsform.

In einem ersten Schritt S10 wird eine Oberfläche des Druckmediums physikalisch und/oder chemisch behandelt, beispielsweise mittels des geladenen Teilchenstroms einer Corona-Entladung oder einer Plasma-Entladung oder mittels eines Stroms elektrisch neutraler freier Radikale.

In einem nachfolgenden zweiten Schritt S12 wird auf die physikalisch und/oder chemisch behandelte Oberfläche des Druckmediums zumindest eine Probe einer Testflüssigkeit aufgebracht.

In einem nachfolgenden dritten Schritt S14 wird ein Verhalten der Testflüssigkeit auf der physikalisch und/oder chemisch behandelten Oberfläche detektiert, beispielsweise optisch mithilfe eines Sensors oder einer Kamera.

In einem nachfolgenden vierten Schritt S16 wird das physikalische und/oder chemische Behandeln der Oberfläche des Druckmediums in Abhängigkeit von dem detektierten Verhalten angepasst, beispielsweise in einer Rückkopplungsschleife.

Die erfindungsgemäße Lösung erlaubt es, Kunststofffolien 12 oder andere Druckmedien mit definierten und reproduzierbaren Oberflächeneigenschaften für ein nachfolgendes Bedrucken bereitzustellen. Die Druckqualität im direkten Inkjet-Druckverfahren lässt sich auf diese Weise erheblich steigern, ohne dass dazu eine zusätzliche Beschichtung des Druckmediums mit einem Primer nötig wäre. Die Prozesseffizienz wird gesteigert, und die Prozesskosten sinken. Auch ermöglicht die erfindungsgemäße Lösung eine Untersuchung bzw. Charakterisierung von Druckmedien hinsichtlich ihrer Bedruckfähigkeiten durch den Anwender.

Die Beschreibung der beispielhaften Ausführungsformen und der Zeichnungen dient lediglich der Erläuterung der Erfindung und der damit erzielten Vorteile und soll die Erfindung nicht beschränken; der Schutzumfang ergibt sich aus den anliegenden Ansprüchen.

### Bezugszeichen

- 10: Vorrichtung zur Oberflächenbehandlung
- 12: Druckmedium, Kunststofffolie
- 14: Behandlungseinheit
- 16: Applikationseinheit
- 18: Detektionseinheit
- 20: Steuereinheit
- 22: Strom geladener Teilchen
- 24: Druckkopf der Applikationseinheit 16
- 26: Druckdüse des Druckkopfes 24
- 28: optischer Sensor der Detektionseinheit
- 30: Druckvorrichtung
- 32: Druckeinheit
- 34: Druckkopf der Druckeinheit 32
- 36: Druckdüsen der Druckeinheit 32
- 38: Transporteinheit
- 40: Tropfen einer Testflüssigkeit

## Patentansprüche

1. Verfahren zur Oberflächenbehandlung eines Druckmediums (12) mit folgenden Schritten:
physikalisches und/oder chemisches Behandeln einer Oberfläche des Druckmediums (12), umfassend ein Einstellen einer Oberflächenspannung oder Oberflächenenergie des Druckmediums (12);
Aufbringen mehrerer Proben (40) einer Testflüssigkeit auf die physikalisch und/oder chemisch behandelte Oberfläche des Druckmediums (12), wobei die mehreren Proben (40) verteilt über eine Breite des Druckmediums (12) in einer Richtung quer zu einer Transportrichtung (x) des Druckmediums (12) aufgebracht werden;
Detektieren eines Verhaltens der Testflüssigkeit auf der physikalisch und/oder chemisch behandelten Oberfläche über die Breite des Druckmediums (12), wobei das Verhalten der Testflüssigkeit ein Kontaktverhalten und/oder ein Fließverhalten der Testflüssigkeit auf der Oberfläche umfasst und wobei aus dem detektierten Verhalten der Testflüssigkeit räumliche Variationen von Oberflächeneigenschaften des Druckmediums (12) erfasst werden; und
Anpassen des physikalischen und/oder chemischen Behandelns der Oberfläche des Druckmediums (12) in Abhängigkeit von dem detektierten Verhalten; umfassend ein Anpassen der Oberflächenspannung oder Oberflächenenergie des Druckmediums (12).

2. Verfahren nach Anspruch 1, bei welchem das Detektieren ein Bestimmen eines Kontaktwinkels und/oder eines Tropfendurchmessers und/oder eines Spreitverhaltens der Testflüssigkeit auf der Oberfläche umfasst.

3. Verfahren nach einem der vorangehenden Ansprüche, bei welchem das Detektieren des Verhaltens der Testflüssigkeit ein optisches Detektieren umfasst.

4. Verfahren nach einem der vorangehenden Ansprüche, bei welchem das physikalische und/oder chemische Behandeln der Oberfläche ein Corona-Behandeln und/oder ein Plasma-Behandeln und/oder ein Beflammen und/oder ein Behandeln mit Radikalen umfasst.

5. Verfahren nach einem der vorangehenden Ansprüche, bei welchem das Anpassen des physikalischen und/oder chemischen Behandelns in einer Rückkopplungsschleife selbsttätig in Abhängigkeit von dem detektierten Verhalten erfolgt.

6. Verfahren nach einem der vorangehenden Ansprüche, ferner umfassend:
Aufbringen einer Druckflüssigkeit auf die physikalisch und/oder chemisch behandelte Oberfläche des Druckmediums (12) nach dem Anpassen.

7. Rechnerlesbares Programm, welches rechnerlesbare Instruktionen umfasst, wobei die rechnerlesbaren Instruktionen dazu eingerichtet sind, auf einer Vorrichtung nach einem der Ansprüche 8 bis 11 ein Verfahren nach einem der vorangehenden Ansprüche auszuführen.

8. Vorrichtung (10; 30) zur Oberflächenbehandlung eines Druckmediums (12) mit:
einer Behandlungseinheit (14), welche zum physikalischen und/oder chemischen Behandeln einer Oberfläche des Druckmediums (12) eingerichtet ist; wobei das physikalische und/oder chemische Behandeln der Oberfläche ein Einstellen einer Oberflächenspannung oder Oberflächenenergie des Druckmediums (12) umfasst;
einer Applikationseinheit (16), welche zum Aufbringen mehrerer Proben (40) einer Testflüssigkeit verteilt über eine Breite des Druckmediums (12) in einer Richtung quer zu einer Transportrichtung (x) des Druckmediums (12) auf die physikalisch und/oder chemisch behandelte Oberfläche des Druckmediums (12) eingerichtet ist;
einer Detektionseinheit (18), welche zum Detektieren eines Verhaltens der Testflüssigkeit auf der physikalisch und/oder chemisch behandelten Oberfläche eingerichtet ist; wobei das Verhalten der Testflüssigkeit ein Kontaktverhalten und/oder ein Fließverhalten der Testflüssigkeit auf der Oberfläche umfasst;
wobei die Detektionseinheit (18) dazu eingerichtet ist, das Verhalten der Testflüssigkeit über die Breite des Druckmediums (12) zu detektieren; und
wobei die Vorrichtung (10; 30) ferner dazu eingerichtet ist, aus dem detektierten Verhalten räumliche Variationen von Oberflächeneigenschaften des Druckmediums (12) zu erfassen; und
einer Steuereinheit (20), welche zum Anpassen des physikalischen und/oder chemischen Behandelns der Oberfläche des Druckmediums (12) in Abhängigkeit von dem detektierten Verhalten eingerichtet ist; umfassend ein Anpassen der Oberflächenspannung oder Oberflächenenergie des Druckmediums (12).

9. Vorrichtung (10; 30) nach Anspruch 8, bei welcher die Behandlungseinheit (14) und/oder die Applikationseinheit (16) und/oder die Detektionseinheit (18) in Reihe entlang einer Transportrichtung (x) des Druckmediums (12) eingerichtet sind.

10. Vorrichtung (30) nach Anspruch 8 oder 9 mit zusätzlich einer Druckeinheit (32) zum Aufbringen einer Druckflüssigkeit auf die physikalisch und/oder chemisch behandelte Oberfläche des Druckmediums (12) nach dem Anpassen.

11. Vorrichtung (10; 30) nach einem der Ansprüche 8 bis 10, bei welcher die Detektionseinheit (18) einen optischen Sensor (28) umfasst, insbesondere einen optischen Sensor (28) zum Bestimmen eines Kontaktwinkels und/oder eines Tropfendurchmessers und/oder eines Spreitverhaltens der Testflüssigkeit auf der Oberfläche umfasst.

## Claims

1. Method for treating the surface of a printing medium (12), having the following steps:
physical and/or chemical treatment of a surface of the printing medium (12), comprising a setting of a surface tension or surface energy of the printing medium (12);
applying several samples (40) of a test liquid onto the physically and/or chemically treated surface of the printing medium (12), wherein the several samples (40) are applied so as to be distributed across a width of the printing medium (12) in a direction perpendicular to a transport direction (x) of the printing medium (12);
detecting a behaviour of the test liquid on the physically and/or chemically treated surface across the width of the printing medium (12), wherein the behaviour of the test liquid comprises a contact behaviour and/or a flow behaviour of the test liquid on the surface and wherein from the detected behaviour of the test liquid, spatial variations of surface properties of the printing medium (12) are captured; and
adapting the physical and/or chemical treatment of the surface of the printing medium (12) as a function of the detected behaviour; comprising an adaptation of the surface tension or surface energy of the printing medium (12).

2. Method according to claim 1, in which the detecting comprises a specifying of a contact angle and/or of a droplet diameter and/or a spreading behaviour of the test liquid on the surface.

3. Method according to any one of the preceding claims, in which the detection of the behaviour of the test liquid comprises an optical detection.

4. Method according to any one of the preceding claims, in which the physical and/or chemical treatment of the surface comprises a corona treatment and/or a plasma treatment and/or a flaming and/or a treatment with radicals.

5. Method according to any of the preceding claims, in which the adaptation of the physical and/or chemical treatment takes place automatically in a feedback loop as a function of the detected behaviour.

6. Method according to any one of the preceding claims, furthermore comprising: applying a printing liquid onto the physically and/or chemically treated surface of the printing medium (12) after the adaptation.

7. Computer-readable program which comprises computer-readable instructions, wherein the computer-readable instructions are configured to carry out, on a device according to any one of claims 8 to 11, a method according to any one of the preceding claims.

8. Device (10; 30) for treating the surface of a printing medium (12), with:
a treatment unit (14) which is configured for the physical and/or chemical treatment of a surface of the printing medium (12); wherein the physical and/or chemical treatment of the surface comprises a setting of a surface tension or surface energy of the printing medium (12);
an application unit (16) which is configured for applying several samples (40) of a test liquid distributed across a width of the printing medium (12) in a direction perpendicular to a transport direction (x) of the printing medium (12) onto the physically and/or chemically treated surface of the printing medium (12);
a detection unit (18) which is configured for detecting a behaviour of the test liquid on the physically and/or chemically treated surface; wherein the behaviour of the test liquid comprises a contact behaviour and/or a flow behaviour of the test liquid on the surface;
wherein the detection unit (18) is configured to detect the behaviour of the test liquid across the width of the printing medium (12); and
wherein the device (10; 30) is furthermore configured to detect spatial variations of surface properties of the printing medium (12) from the detected behaviour; and
a controller (20) which is configured for adapting the physical and/or chemical treatment of the surface of the printing medium (12) as a function of the detected behaviour; comprising an adaptation of the surface tension or surface energy of the printing medium (12).

9. Device (10; 30) according to claim 8, in which the treatment unit (14) and/or the application unit (16) and/or the detection unit (18) are configured in series along a transport direction (x) of the printing medium (12).

10. Device (30) according to claim 8 or 9 having in addition a printing unit (32) for applying a printing liquid onto the physically and/or chemically treated surface of the printing medium (12) after the adaptation.

11. Device (10; 30) according to any one of claims 8 to 10, in which the detection unit (18) comprises an optical sensor (28), in particular an optical sensor (28) for specifying a contact angle and/or a droplet diameter and/or a spreading behaviour of the test liquid on the surface.

## Revendications

1. Procédé de traitement de surface d'un support d'impression (12) avec les étapes suivantes :
traitement physique et/ou chimique d'une surface du support d'impression (12), comprenant un réglage d'une tension de surface ou d'une énergie de surface du support d'impression (12) ;
application de plusieurs échantillons (40) d'un liquide de test sur la surface traitée physiquement et/ou chimiquement du support d'impression (12), dans lequel les plusieurs échantillons (40) sont appliqués de manière répartie sur une largeur du support d'impression (12) dans une direction transversale à une direction de transport (x) du support d'impression (12) ;
détection d'un comportement du liquide de test sur la surface traitée physiquement et/ou chimiquement sur la largeur du support d'impression (12), dans lequel le comportement du liquide de test comprend un comportement de contact et/ou un comportement d'écoulement du liquide de test sur la surface et dans lequel des variations spatiales de propriétés de surface du support d'impression (12) sont détectées à partir du comportement détecté du liquide de test ; et
adaptation du traitement physique et/ou chimique de la surface du support d'impression (12) en fonction du comportement détecté ; comprenant une adaptation de la tension de surface ou de l'énergie de surface du support d'impression (12).

2. Procédé selon la revendication 1, dans lequel la détection comprend une détermination d'un angle de contact et/ou d'un diamètre de goutte et/ou d'un comportement d'étalement du liquide de test sur la surface.

3. Procédé selon l'une quelconque des revendications précédentes, dans lequel la détection du comportement du liquide de test comprend une détection optique.

4. Procédé selon l'une quelconque des revendications précédentes, dans lequel le traitement physique et/ou chimique de la surface comprend un traitement corona et/ou un traitement plasma et/ou un flambage et/ou un traitement avec des radicaux.

5. Procédé selon l'une quelconque des revendications précédentes, dans lequel l'adaptation du traitement physique et/ou chimique est effectuée automatiquement dans une boucle de rétroaction en fonction du comportement détecté.

6. Procédé selon l'une quelconque des revendications précédentes, comprenant en outre : l'application d'un liquide d'impression sur la surface traitée physiquement et/ou chimiquement du support d'impression (12) après l'adaptation.

7. Programme lisible par ordinateur qui comprend des instructions lisibles par ordinateur, dans lequel les instructions lisibles par ordinateur sont configurées pour mettre en oeuvre, sur un dispositif selon l'une quelconque des revendications 8 à 11, un procédé selon l'une quelconque des revendications précédentes.

8. Dispositif (10 ; 30) de traitement de surface d'un support d'impression (12) avec :
une unité de traitement (14) qui est configurée pour traiter physiquement et/ou chimiquement une surface du support d'impression (12) ; dans lequel le traitement physique et/ou chimique de la surface comprend un réglage d'une tension de surface ou d'une énergie de surface du support d'impression (12) ;
une unité d'application (16) qui est configurée pour appliquer plusieurs échantillons (40) d'un liquide de test répartis sur une largeur du support d'impression (12) dans une direction transversale à une direction de transport (x) du support d'impression (12) sur la surface traitée physiquement et/ou chimiquement du support d'impression (12) ;
une unité de détection (18) qui est configurée pour détecter un comportement du liquide de test sur la surface traitée physiquement et/ou chimiquement ; dans lequel le comportement du liquide de test comprend un comportement de contact et/ou un comportement d'écoulement du liquide de test sur la surface ;
dans lequel l'unité de détection (18) est configurée pour détecter le comportement du liquide de test sur la largeur du support d'impression (12) ; et
dans lequel le dispositif (10 ; 30) est en outre configuré pour détecter, à partir du comportement détecté, des variations spatiales de propriétés de surface du support d'impression (12) ; et
une unité de commande (20) qui est configurée pour adapter le traitement physique et/ou chimique de la surface du support d'impression (12) en fonction du comportement détecté ; comprenant une adaptation de la tension de surface ou de l'énergie de surface du support d'impression (12).

9. Dispositif (10 ; 30) selon la revendication 8, dans lequel l'unité de traitement (14) et/ou l'unité d'application (16) et/ou l'unité de détection (18) sont configurées en série le long d'une direction de transport (x) du support d'impression (12).

10. Dispositif (30) selon la revendication 8 ou 9 avec en outre une unité d'impression (32) pour appliquer un liquide d'impression sur la surface traitée physiquement et/ou chimiquement du support d'impression (12) après l'adaptation.

11. Dispositif (10 ; 30) selon l'une quelconque des revendications 8 à 10, dans lequel l'unité de détection (18) comprend un capteur optique (28), en particulier un capteur optique (28) pour déterminer un angle de contact et/ou un diamètre de goutte et/ou un comportement d'étalement du liquide de test sur la surface.
